# EUROPÄISCHE PATENTSCHRIFT

(11) **EP 1 224 512 B1**
(45) Veröffentlichungstag und Bekanntmachung des Hinweises auf die Patenterteilung: **10.01.2007**
(21) Anmeldenummer: 00972743.9
(22) Anmeldetag: 12.10.2000
(51) Int. Cl.: G05B 19/408

(54) **STEUERUNGSSYSTEM EINER NUMERISCHEN WERKZEUGMASCHINE MIT EINER WIEDERVERWENDBAREN SOFTWARESTRUKTUR**
CONTROL SYSTEM OF A NUMERICAL TOOL MACHINE WITH A REUSABLE SOFTWARE STRUCTURE
SYSTEME DE COMMANDE D'UNE MACHINE-OUTIL NUMERIQUE AVEC STRUCTURE DE LOGICIEL REUTILISABLE

(30) Priorität: 14.10.1999 DE 19949558
(43) Veröffentlichungstag der Anmeldung: 24.07.2002
(73) Patentinhaber: Dr. Johannes Heidenhain GmbH, 83292 Traunreut (DE)
(72) Erfinder: RUTKOWSKI, Christian, 83278 Traunstein (DE)
(86) Internationale Anmeldenummer: PCT/EP2000/010042
(87) Internationale Veröffentlichungsnummer: WO 2001/027703

(56) Entgegenhaltungen:
- US-A- 5 212 645
- US-A- 5 943 497

## Beschreibung

Die Erfindung betrifft ein Steuerungssystem einer numerischen Werkzeugmaschine mit einer wiederverwendbaren Softwarestruktur nach Anspruch 1.

Die EP 0 524 344 B1 offenbart eine konfigurierbare Werkzeugmaschinensteuerung, die aus mehreren aufgabenorientierten Einheiten besteht, beispielsweise einem numerischen und einem speicherprogrammierbaren Steuerteil, einer Bedienereinheit und einem Kommunikationsbereich mit Netzwerkschnittstelle. Weiterhin ist mindestens ein in Soft- oder in Soft- und Hardware realisiertes Funktionsobjekt, das eine Funktion durchführen kann, vorgesehen. Dieses Funktionsobjekt untergliedert sich in einen Prozedurteil, einen Kommunikationsteil und evtl. einen Bedienteil. Zusätzlich ist mindestens ein Objektmanager vorhanden, der mindestens zwei Funktionsobjekte verwaltet, insbesondere deren Nachrichtenaustausch synchronisiert. Diese Steuerungsstruktur wird auf mindestens einer Datenverarbeitungsanlage realisiert, welche die Daten der Funktionsobjekte und Objektmanager bearbeitet und selbst als aufgabenorientierte Einheit ausgebildet ist. Die Funktionsobjekte werden zu Prozessen zusammengefasst. Dabei werden so viele Prozesse gebildet, wie Datenverarbeitungsanlagen vorhanden sind und durch jede Datenverarbeitungsanlage ein Prozess abgearbeitet.
Aus der EP 0 524 344 B1 ist nicht bekannt das Steuerungssystem derart auszugestalten, damit deren prinzipielle Softwarestruktur wiederverwendet werden kann.

Aus der EP 0 657 043 B1 ist eine objektorientierte Steuerung für Werkzeugmaschinen bekannt, bei der aus Objektklassen eine Reihe von Objekten gebildet werden. Ausgehend von der in der EP 0 524 344 B1 offenbarten Steuerung werden in der EP 0 657 043 B1 Objektklassen und Objekte offenbart, die erforderlich sind, um eine herkömmliche Funktionalität einer Steuerung zu realisieren. Dazu gehören beispielsweise Objektklassen für Bearbeitungs-, Geometrie, Kinematik- und Technologiedatentypen ebenso wie Steuerdatentypen und eine Objektklasse Ablaufsteuerung. Von jeder Objektklasse kann eine beliebige Anzahl Objekte gebildet werden, die jeweils einen eigenen Datenbereich, einen Botschaftenmechanismus zur Kommunikation mit anderen Objekten und einen Prozedurteil zur Ausführung von Methoden zur Bearbeitung, Kinematik, Geometrie oder Technologie beinhalten. Aufgrund der Abstammung mehrerer Objekte von einer Objektklasse weisen diese Objekte teilweise identischen oder zumindest ähnlichen Programmcode auf, den sie von der Objektklasse geerbt haben. Weiterhin sind auch die Objektklassen als abstraktes Datenmodell in der steuerungsinternen Datenhaltung abgebildet, wodurch abstrakte anwendungsspezifische Datentypen ergänzbar und anwendungsspezifische Objektausprägungen modifizierbar sind. Durch die Ablaufsteuerung werden die Benutzereingaben interpretiert und führen zur Aktivierung der ausgewählten Objekte. Die ausgewählten Objekte kommunizieren untereinander und bilden durch diese netzwerkartige Verknüpfung eine ablauffähige Funktionseinheit der Steuerung.

Aus der EP 0 657 043 B1 ist zwar bereits bekannt, Eigenschaften einer Objektklasse an ein Objekt dieser Klasse weiterzuvererben und für die Objektklassen abstrakte Datenmodelle in der steuerungsinternen Datenhaltung zu speichern, die vom Programmierer verändert werden können, was jedoch nur die Objekte betrifft. Da ein Objekt immer mindestens eine konkrete Funktion der Steuerung und damit der Maschine realisiert, müssen die Objekte maschinenspezifische Merkmale aufweisen, wodurch sie inkompatibel sind zu einer anderen Steuerung für eine andere Maschine. Somit können Objekte in der Regel nicht unverändert wiederverwendet werden.

Aus der EP 0 717 866 B1 ist ein CNC-Steuerungssystem bekannt, das ein objektorientiertes Programm beinhaltet, in welchem Objekte objektorientierte Nachrichten austauschen. Im objektorientierten Programm sind die Objekte in Klassen unterteilt, beispielsweise eine Prozessklasse, die Objekte für Bearbeitungsprozesse wie Bohren, Gewindeschneiden, Räumen usw. beinhaltet, die durch Maschinenkomponenten ausgeführt werden. Dabei beinhaltet eine Klasse immer ähnliche Objekte, das heisst Objekte, die in ihrer Grundstruktur übereinstimmen. Aufgrund der einheitlichen Grundstruktur der Objekte einer Klasse besteht die Möglichkeit, dass beim Erstellen neuer Objekte ausgewählte Eigenschaften der jeweiligen Klasse an das neue Objekt vererbt werden. Eine weitere Objektklasse weist Maschinenkomponenten, wie beispielsweise eine Spindel, Achsen, einen Drehtisch usw., auf. Weiterhin sind Objektklassen für das Kernel mit einem Motion und einem Logic Controller als Objekte, für Plattform Services, das Operating System und die Device Driver vorgesehen. Im Betrieb der Steuerung ist es erforderlich, dass Nachrichten zwischen den einzelnen Objekten ausgetauscht werden. Für einen Bohrvorgang wird beispielsweise vom Bohr-Objekt eine Nachricht die Drehzahl des Bohrers betreffend an das Objekt Spindel übertragen, weiterhin werden Nachrichten die Position des Loches betreffend an die Objekte der beteiligten Achsen übertragen usw.. Dabei ist ein Standard-Interface für die Nachrichten vorgesehen, damit diese einen universellen Aufbau aufweisen und unabhängig von den beteiligten Objekten ausgestaltet werden können. Diese Standard-Schnittstelle zum Nachrichtenaustausch zwischen Objekten wird bei einem Objekt, das Nachrichten bezüglich der Bewegung empfängt oder sendet durch einen Softwarekern realisiert, der in Echtzeit arbeiten soll und Nachrichten empfängt und sendet.

Auch in der EP 717 866 B1 ist nicht offenbart, wie die Struktur von Steuerungssoftware auszugestalten ist, um eine Wiederverwendung des Software-Designs bei einer ähnlichen numerischen Steuerung zu ermöglichen.

Aus dem Buch "Entwurfsmuster", von Erich Gamma und Richard Helm, erschienen im Addison-Wesley Verlag1996 und dem Buch "Objektorientierte Software-Entwicklung am Beispiels von ET++", von Erich Gamma, erschienen im Springer Verlag, 1992 ist der Begriff des Frameworks bekannt. Unter Framework wird eine Menge kooperierender Klassen verstanden, welche die Elemente eines wiederverwendbaren Entwurfs für eine bestimmte Art von Software darstellen. Ein Framework bietet eine Architekturhilfe beim Aufteilen des Entwurfs in abstrakte Klassen und beim Definieren ihrer Zuständigkeiten und Interaktionen. Ein Entwickler passt das Framework für eine bestimmte Anwendung an, indem er Unterklassen der Framework-Klassen bildet und deren Objekte zusammensetzt. Ein Framework wird daher von einem Programmierer dazu benutzt, um die Softwarearchitektur einer Gruppe verwandter Anwendungen festzulegen. Diese Entwurfswiederverwendung ergänzt die bereits aus der objektorientierten Softwareentwicklung bekannte Codewiederverwendung.

Aus dem Artikel "Framework - Basis eines Automatisierungssystems", von Georg Süss, erschienen in etz, Heft 21/1998, Seite 22 - 25, ist bekannt, dass ein Framework nicht nur eine gemeinsam genutzte Datenhaltung ermöglicht, sondern auch einen integrierten Ansatz für die Beschreibung und abgestimmte Ausführung einer Gesamtapplikation in einer verteilten Architektur realisierbar macht. Dafür muss ein Framework für Automatisierungsanwendungen auf Windows NT aufsetzen, um eine Strukturierung der Gesamtapplikation in Objekten mittels dem Component Object Model und die Verteilung der Komponenten eines Systems über mehrere Rechner mittels dem Distributed Component Object Model zu ermöglichen. Ein Automatisierungs-Framework bietet dann die Möglichkeit die einzelnen Bestandteile einer verteilten Automatisierungslösung zentral in einer systemweiten Datenablage zu sammeln. Damit stehen diese Informationen sofort jedem Rechner eines Netzwerks identisch zur Verfügung. Weiterhin erfolgt durch das Framework - bei einer Unterteilung der Applikation in Einzelobjekte - eine Verwaltung dieser Objekte und Zuordnung zu einzelnen Netzwerkstationen. Dies ermöglicht eine dynamische Verschiebung einzelner Objekte zur Laufzeit, wodurch eine bessere Auslastung der Rechner erreicht werden kann. Ausserdem können dadurch weitere Stationen dynamisch in das Applikationsnetzwerk zur Laufzeit eingebunden werden.

Aus dem Artikel "Softwarekonzepte für eine steuerungsintegrierte Werkzeugüberwachung" von 1. Suwalski, R. Urban und J. Burger, erschienen in ZWF 92 (1997) 9, Seite 436 - 439, ist bekannt, dass sich aus dem Bereich objektorientierter Software-Techniken heraus die Software-Frameworks entwickelt haben. Ein Framework besteht aus einer Menge zusammenarbeitender Klassen, die die Architektur der Anwendung bestimmen. Durch Verwendung von Frameworks wird daher die Entwurfswiederverwendung gegenüber der Codewiederverwendung betont. Durch die Verwendung von Frameworks werden problemspezifische Algorithmen vom Entwurf entkoppelt. Die dadurch erreichte Abstraktion des Entwurfs des Systems von der Implementierung problemspezifischer Algorithmen ermöglicht eine schnellere Entwicklung, führt zu ähnlichen Strukturen und einer einfacheren Wartbarkeit. Ausserdem wird auch eine klare, strukturierte und schlanke Dokumentation ermöglicht. Dies wird anhand eines Beispiels mit Frameworks erläutert, die für einzelne Prozesse die Grundmechanismen der Kommunikation und die Struktur der Implementierung als Zustandsmodell vorgegeben haben. Flexibilität wird durch Verhaltensmuster erreicht, deren algorithmische Ausprägung für den jeweiligen Anwendungsfall implementiert wird.

Aufgabe der vorliegenden Erfindung ist es daher, ein Steuerungssystem derart auszugestalten, dass die Struktur und der maschinen- und steuerungsunabhängige Teil der Implementierung der Steuerungssoftware für möglichst viele Steuerungsfunktionen übernommen werden kann.

Diese Aufgabe wird durch ein Steuerungssystem mit den im Anspruch 1 angegebenen Merkmalen gelöst.

Weiterbildungen und vorteilhafte Ausgestaltungen des erfindungsgemässen Steuerungssystems sind den abhängigen Ansprüchen zu entnehmen.

Das erfindungsgemässe Steuerungssystem weist den Vorteil auf, dass die als Framework ausgestaltete Software für eine generische numerische Steuerung als Klassenbibliothek implementiert ist, die die Softwarestruktur einer generischen numerischen Steuerung vollständig beinhaltet. Die Software einer generischen numerischen Steuerung umfasst dabei die gesamte funktionale Struktur der Steuerungssoftware, nicht aber die konkret programmierten Funktionen. Durch die Klassenbibliothek werden einheitliche Schnittstellen für die konkreten Funktionen definiert. Die einzelnen Funktionen, die durch die Steuerung ausgeführt werden, sind durch eine steuerungsspezifische Klasse implementiert, die von einer Klasse der Klassenbibliothek abgeleitet ist. Dadurch kann diese Steuerungsstruktur auf unterschiedliche Steuerungen übertragen werden, selbst wenn die konkreten Funktionen anderer Steuerungen völlig unterschiedlich sind. Durch Abstraktion der Struktur und der Klassenbibliotheken (Programm mit ausführbarem Code) von den konkreten Funktionen wird die Softwarestruktur wiederverwendbar.

Die Erfindung wird nachfolgend anhand der in der Zeichnung dargestellten Ausführungsformen näher erläutert. Die Figur zeigt eine mögliche Aufteilung des Steuerungsprogramms in Klassen, abgeleitete Klassen und Instanzen abgeleiteter Klassen.

Die Erfindung soll im folgenden anhand einer einfachen numerischen Steuerung für eine Werkzeugmaschine erläutert werden. Dabei ist es für die Struktur der Steuerungssoftware unerheblich, ob es sich bei der Werkzeugmaschine um eine Fräs-, Dreh-, Schleif- oder Erodiermaschine oder um ein Bearbeitungszentrum handelt.

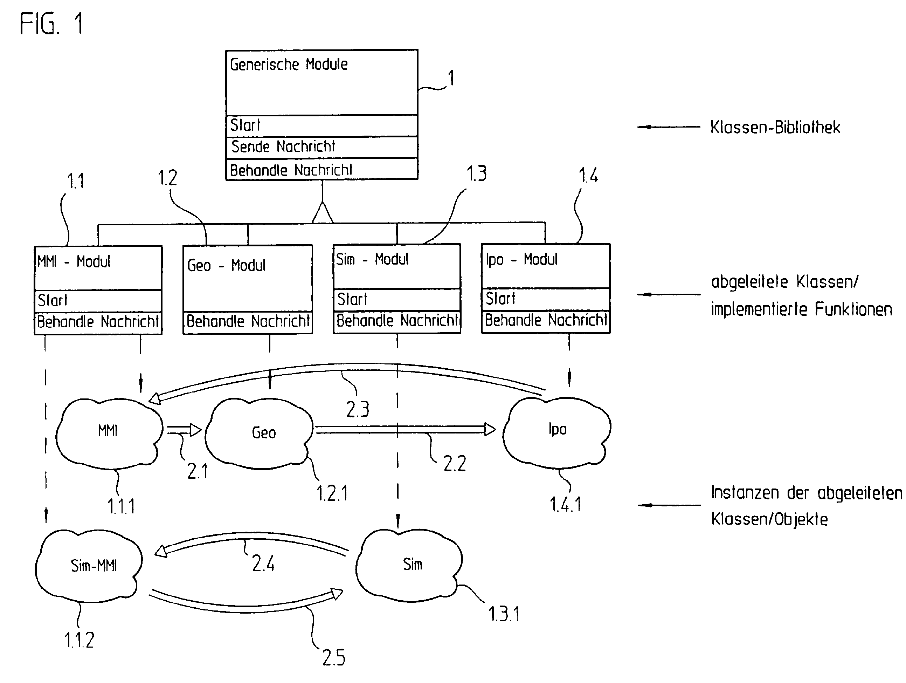

Das Steuerungsprogramm für eine numerische Steuerung, welches in Fig. 1 teilweise grafisch dargestellt wird, ist auf Basis eines Frameworks realisiert, wobei das Framework durch mindestens eine Klassenbibliothek 1 implementiert wird. Die wesentlichen Funktionen des Steuerungsprogramms einer Werkzeugmaschine lassen sich in die Funktionalitätsgruppen Geometrieverarbeitung 1.2, Interpolator 1.4, Mensch-Maschine-Interface 1.1, Bewegungssteuerung und speicherprogrammierbarer Steuerungsteil untergliedern.

Erfindungsgemäss ist eine Framework Klassenbibliothek 1 vorgesehen. Diese Klassenbibliothek 1 beinhaltet die Software einer generischen Steuerung für die einzelnen abstrahierten Funktionalitäten und deren Zusammenwirken. Dabei wird durch die Klassenbibliothek 1 lediglich die funktionale Struktur des Steuerungsprogramms festgelegt; der Programmcode für die konkreten Funktionen ist aber nicht in dem Framework enthalten. Dieser Programmcode wird durch die spezifische Implementierung der Klassen in Form von abgeleiteten Klassen 1.1 - 1.4 definiert, bei denen nicht die Struktur, sondern die durchgeführte Funktion und der dafür erforderliche Programmcode das wesentliche Merkmal ist. Durch das Framework wird daher die Existenz einer Funktion im Steuerungsprogramm und das Zusammenwirken mit anderen Funktionen des Steuerungsprogramms definiert. Die Realisierung der Funktion durch Programmcode ist hingegen nicht im Framework enthalten. Diese erfolgt in einer abgeleiteten Klasse 1.1 - 1.4, die von einer Klasse der Klassenbibliothek 1 abgeleitet ist und in das Framework eingebunden wird.

Durch die Implementierung der abgeleiteten Klassen wird eine Applikation realisiert. Beispielsweise wird eine abgeleitete Klasse für einen Interpolator 1.4 implementiert, die an eine bestimmte Form der Ansteuerung der Antriebe angepasst ist.

Weiterhin wird durch ein Framework die Interaktion, also das Zusammenwirken, zwischen einzelnen abgeleiteten Klassen 1.1 - 1.4 als Funktionalität der generischen Steuerung realisiert. Dies erfolgt durch Kommunikationskanäle 2.1 - 2.5 zwischen einzelnen Objekten 1.1.1 - 1.4.1, die Instanzen der abgeleiteten Klassen 1.1 - 1.4 des Frameworks bzw. der Klassenbibliothek 1 sind. Ein derartiger Kommunikationskanal 2.1 - 2.5 wird durch aus dem Stand der Technik bekannte Mechanismen zum Datenaustausch realisiert. Durch einen Kommunikationskanal 2.1 - 2.5 wird festgelegt, welche Objekte 1.1.1 - 1.4.1 des Frameworks überhaupt miteinander kommunizieren können. Aus dem Stand der Technik sind bereits Verfahren bekannt, um zu definieren, welche Objekte als Instanzen abgeleiteter Klassen 1.1.1 - 1.4.1 miteinander kommunizieren. Diese Definition ist dort Teil der Implementierung einer konkreten Steuerungssoftware.

Weiterhin wird durch das Framework das Datenformat und das Protokoll der Übertragungsdaten definiert, d.h. welche Daten über einen Kommunikationskanal 2.1 - 2.5 zwischen Objekten 1.1.1 - 1.4.1 des Frameworks übertragen werden. Die Interpretation der Übertragungsdaten als Parameter oder Anweisung erfolgt durch die abgeleiteten Klassen 1.1 - 1.4.

Wird bei Erstellung eines neuen Steuerungsprogramms ein bereits vorhandenes Framework benutzt, liegen dem Programmierer bereits Framework Klassen 1 vor, die bei der Erstellung des Steuerungsprogramms für eine spezifische Steuerung einer bestimmten Werkzeugmaschine teilweise an diese angepasst bzw. für diese implementiert werden müssen. Dies geschieht dadurch, dass der Programmierer aus den vorhandenen Framework Klassen 1 abgeleitete Klassen 1.1 - 1.4 bildet und dadurch eine Applikation erzeugt. Die Klassen 1 des Frameworks definieren virtuelle Funktionen, deren Implementierung in den abgeleiteten Klassen 1.1 - 1.4 erfolgt, oder deren Implemetierung durch die abgeleiteten Klassen 1.1 - 1.4 bei Bedarf auch geändert (überladen) werden kann. Die Implementierung der abgeleiteten Klasse 1.1 - 1.4 erfolgt, indem der Programmierer die für die gewünschte Funktionalität notwendigen lmplementierungen dieser virtuellen Funktion programmiert und die dafür notwendigen Daten (Attribute) definiert.

In einem zweiten Schritt der Implementierung legt der Programmierer fest, von welchen abgeleiteten Klassen 1.1 - 1.4 Objekte 1.1.1 - 1.4.1 instantiiert werden und welche Objekte 1.1.1 - 1.4.1 miteinander kommunizieren. Die Information, welche Objekte 1.1.1 - 1.4.1 erzeugt werden und welche miteinander kommunizieren, kann dabei in den abgeleiteten Klassen vorhanden sein, aus einer externen Datei ausgelesen oder vom Benutzer eingegeben werden.

Die prinzipielle Funktionsweise ist durch die generische Steuerung definiert und in den Klassen 1 des Frameworks implementiert. Die konkrete Funktionalität einer Steuerung ergibt sich daraus, dass im Betrieb virtuelle Funktionen der generischen Steuerung aufgerufen werden und das von der konkreten Implementierung abhängige Ergebnis weiterverwendet und gegebenenfalls an Objekte 1.1.1 - 1.4.1 übermittelt wird, deren Auswahl ebenfalls, wie oben beschrieben, von der konkreten Realisierung abhängt.

Durch Verwendung eines bereits existierenden Frameworks beschränkt sich die Erstellung eines Steuerprogramms dann auf die Programmierung der durchzuführenden technologie- und maschinenspezifischen Funktionen in abgeleiteten Klassen 1.1 -1.4 und die Definition der Interaktion zwischen Objekten 1.1.1 - 1.4.1 über Kommunikationskanäle 2.1 - 2.5.

Entsprechend wird im Betrieb einer derart programmierten numerischen Steuerung wie in der Figur dargestellt vorgegangen. Die generische Steuerung, die durch die Klassenbibliothek 1 des Frameworks definiert ist, weist beispielsweise unter anderem die folgenden Funktionen auf:
- Start der Steuerung,
- Senden einer Nachricht von einem Sender an einen Empfänger und
- Auslösen der Nachrichtenverarbeitung beim Empfänger.

Nachdem ein Benutzer die Steuerung eingeschaltet hat, werden durch den im Framework vorhandenen Mechanismus zur Instantiierung von abgeleiteten Klassen 1.1 - 1.4 die für die Anwendung benötigten Objekte 1.1.1 - 1.4.1 erzeugt. Weiterhin wird in der Klassenbibliothek 1 des Frameworks die Start-Funktion aufgerufen, was aufgrund der Funktionalität der generischen Steuerung den Aufruf einer Start-Funktion in jedem erzeugten Objekt 1.1.1 - 1.4.1 bewirkt. Dabei kann die Start-Funktion in einer abgeleiteten Klasse 1.1 - 1.4 mit einer spezifischen Implementierung überladen werden.

Bei der abgeleiteten Klasse 1.1 Mensch-Maschine-Interface wird durch die Start-Funktion beispielsweise ein Fenster geöffnet, in dem der Benutzer eine Eingabe tätigen kann. Auf diese Eingabe wird gewartet, aus der Eingabe wird eine Nachricht gebildet und diese Nachricht wird verschickt.

Bei der abgeleiteten Klasse 1.4 Interpolator werden durch die Start-Funktion die Positionen der Maschinenachsen gehalten. Dafür werden die Lageistwerte der Achsen der Maschine ermittelt und diese Istwerte als Lagesollwerte den Regelkreisen vorgegeben.

Bei der abgeleiteten Klasse 1.3 Simulation wird durch die Start-Funktion ein Fenster zur Darstellung einer Simulationsgrafik geöffnet.

Die abgeleitete Klasse 1.2 der Geometrieverarbeitung (Geo) implementiert die Start-Funktion nicht, sondern verwendet die in der Klassenbibliothek vorhandene Implementierung.

Wie bereits erläutert, wird vom Mensch-Maschine-Interface 1.1.1 eine Nachricht gesendet, sobald eine Eingabe abgeschlossen wurde. Diese Nachricht wird durch das Framework über einen Kommunikationskanal 2.1 an den richtigen Empfänger übermittelt und im Empfänger durch das Framework eine Behandlung der Nachricht ausgelöst.

Bei der im jeweiligen Objekt 1.1.1 - 1.4.1 ausgelösten Behandlung nach dem Empfang einer Nachricht wird eine in der Klassenbibliothek 1 des Frameworks definierte Funktion auf die mit der Nachricht übertragenen Daten angewendet. Diese Funktion muss in jeder abgeleiteten Klasse 1.1 - 1.4 implementiert werden. Das Framework stellt hierfür keine Implemetierung zur Verfügung.

Im Geometrie-Objekt 1.2.1 werden die Daten einer empfangenen Nachricht als anzufahrende Positionen interpretiert, auf deren Basis Parameter der Bahnkurve berechnet und als Nachricht verschickt werden.

Diese Parameter der Bahnkurve werden über einen Kommunikationskanal 2.2 an das Interpolator-Objekt 1.4.1 weitergeleitet, durch das die Achsantriebe der Maschine angesteuert werden und das die angefahrenen Bahnpunkte als Nachricht verschickt.

Wird im Objekt 1.1.1 des Mensch-Maschine-Interface eine Nachrichtenbehandlung durch den Empfang einer neuen Nachricht ausgelöst, werden die empfangenen Daten als Position interpretiert, die dem Benutzer angezeigt wird.

Soll eine Bearbeitung nur simuliert werden, wird für die Simulation aus der abgeleiteten Klasse 1.1 Mensch-Maschine-Interface ein Objekt 1.1.2 instantiiert, das die eingegebenen Daten als Nachricht an das Simulations-Objekt 1.3.1 weiterleitet.

Das Simulations-Objekt 1.3.1 führt bei der Simulation der Bearbeitung gemäss den Eingaben die entsprechenden Berechnungen durch und verschickt die berechneten Bahnpunkte als Nachricht.

Diese Nachricht wird vom Framework an das Mensch-Maschine-Interface 1.1.2 für die Simulation übertragen. Aufgrund der dort ausgelösten Nachrichtenbehandlung werden die Simulationsdaten dem Benutzer angezeigt.

Um das Verschicken einer Nachricht zu realisieren, wird eine Funktion aus der Klassenbibliothek 1 des Frameworks aufgerufen. Da der Transport von Nachrichten eine Funktion der generischen Steuerung ist, gibt es keine Notwendigkeit und auch keine Möglichkeit diese Funktion mit einer spezifischen Implementierung zu überladen.

Gemäss der Figur kann die Steuerungssoftware untergliedert werden. Die Klassenbibliothek 1 beinhaltet Funktionen, die nicht speziell für eine Steuerung oder Maschine ausgestaltet sind, beispielsweise das Versenden einer Nachricht.

Zur Klassenbibliothek 1 gehören ferner virtuelle Funktionen, die aufgrund der speziellen Steuerungs-Hardware oder Maschinen-Mechanik durch den Programmierer einer abgeleiteten Klasse 1.1 - 1.4 eine spezifische Ausgestaltung erfahren können, wie beispielsweise die Start-Funktion, oder müssen, wie beispielsweise die Behandlung einer Nachricht, damit sie mit der speziellen Steuerungs-Hardware und/oder Maschinen-Mechanik zusammenarbeiten.

Die Objekte 1.1.1 - 1.4.1 sind Instanzen der abgeleiteten Klassen 1.1 - 1.4, die die spezifischen Daten für eine bestimmte Funktion beinhalten.

So wurde beispielsweise die virtuelle Funktion des Mensch-Maschine-Interfaces 1.1 zunächst implementiert, um mit der speziellen Steuerungs-Hardware zusammenzuarbeiten, um mit einer speziellen Hardware eine Ein- und Ausgabe zu realisieren. Danach wurden die benötigten Objekte für ein Mensch-Maschine-Interface für die Simulation 1.1.2 und eines für die Bearbeitung 1.1.1 instantiiert.

Um die notwendige Interaktion über die Kommunikationskanäle 2.1 - 2.5 zu erreichen, muss dem Framework bekannt sein, welche dieser Objekte 1.1.1 - 1.4.1 jeweils untereinander Nachrichten austauschen. Beispielsweise sendet ein Objekt 1.1.1 für die Eingabe Nachrichten an das Objekt 1.2.1 für die Geometrieberechnung, und empfängt Nachrichten vom Objekt 1.4.1 für die Interpolation, während die Instanz 1.1.2 derselben Klasse für die Simulation Nachrichten mit dem Objekt 1.3.1 für die Simulationsberechnung austauscht.

Die hier getroffene Aufteilung in Klassen 1, abgeleitete Klassen 1.1 - 1.4 und Objekte 1.1.1 - 1.4.1 stellt nur eine von mehreren Möglichkeiten dar. Alternativ ist beispielsweise denkbar, dass die Geometrieverarbeitung und/oder der Interpolator hardwareunabhängig programmiert werden, so dass diese Funktionalitäten in einer Klasse 1 realisiert werden können.

Durch die hier beschriebene Aufteilung des Programmcodes in Framework und ausserhalb des Frameworks angeordneten, maschinenspezifischen Programmcode wird für die Funktionen der Steuerung unterschieden zwischen wiederverwendbarer Struktur, die zum Framework zusammengefasst wird, und maschinenspezifischem Programmcode, der ausserhalb des Frameworks realisiert wird. Der Programmcode des Frameworks kann bei einer Gruppe von Realisierungen benutzt werden, die sich in der benutzten Steuerungs-Hardware und Maschinen-Mechanik unterscheiden. Dabei ist der Grad wie weit die Unterschiede gehen dürfen abhängig vom Abstraktionsgrad des Frameworks.

Programmcode der abgeleiteten Klassen 1.1 - 1.4 kann nur auf andere Anwendungsfälle übertragen werden, wenn bei der Steuerungs-Hardware und Maschinen-Mechanik zumindest Kompatibilität gewährleistet ist.

Es ist vorteilhaft die allgemein gültige Funktionalität des Steuerungsprogramms für eine numerische Steuerung derart in Form eines Frameworks zu realisieren, um das durch das Framework definierte Zusammenwirken der Klassen 1 und abgeleiteten Klassen 1.1 - 1.4 wiederverwenden zu können. Dadurch können die komplexen Verknüpfungen der einzelnen Funktionen untereinander über Kommunikationskanäle 2.1 - 2.5 wiederverwendet werden.

Das Framework kann zusätzlich einen Mechanismus zur Fehlerbehandlung beinhalten. Dafür ist im Framework eine Klasse mit generischen Funktionen zur Fehlerbehandlung vorgesehen, aus der durch eine maschinenspezifische Implementierung der Funktionen die abgeleitete Klasse zur Fehlerbehandlung erzeugt wird. Durch die Instantiierung der Funktionen der abgeleiteten Klasse wird mindestens ein Objekt erzeugt.

Da bei jeder beliebigen Anwendung einer Funktion auf die ein Objekt bildenden Daten ein Fehler auftreten kann, wird vorteilhaft von jedem Objekt ein Kommunikationskanal zum Objekt Fehlerbehandlung vorgesehen. Abhängig von den zur Fehlerbehandlung vorhandenen Funktionen, sind entsprechend auch Kommunikationskanäle von dem Objekt zur Fehlerbehandlung zu den für die Fehlerbehandlung benötigten Objekten vorzusehen.

Soll beispielsweise durch eine Funktion zur Fehlerbehandlung bei einem beliebigen Fehler jede Bewegung der durch das Steuerungsprogramm gesteuerten Maschine verhindert werden, dann müssen Kommunikationskanäle von allen Objekten 1.1.1 - 1.4.1 zum Objekt zur Fehlerbehandlung vorhanden sein. Dadurch wird ermöglicht, dass Fehler, die in jedem Objekt auftreten können, auch erkannt werden können. Weiterhin muss ein Kommunikationskanal vom Objekt zur Fehlerbehandlung zum Objekt 1.4.1 Interpolator, durch den die Bewegungssteuerung erfolgt, vorhanden sein, um im Fehlerfall jegliche Bewegung zu verhindern.

Alternativ zum Stillsetzen aller Achsen der Maschine kann auch vorgesehen sein, dass im Fehlerfall ein bestimmter Rückzugsweg abgefahren wird, um beispielsweise das Werkzeug einer Fräsmaschine vom Werkstück zu entfernen, damit weder am Werkzeug noch am Werkstück durch den Fehler eine Beschädigung verursacht wird. Dann wird durch die Nachricht des Objekts zur Fehlerbehandlung an das Interpolator-Objekt 1.4.1, dass ein Fehler vorliegt, im Interpolator eine Rückzugsbewegung ausgelöst.

Bei der Realisierung einer Steuerung, die das erfindungsgemässe Steuerungsprogramm abarbeitet, besteht die Möglichkeit die Steuerung als verteiltes System auszugestalten, bei dem Teile der Steuerung und damit des Steuerungsprogramms an unterschiedlichen Orten von unterschiedlichen Prozessoren abgearbeitet werden. In diesem Fall ist es sinnvoll das Steuerungsprogramm in Prozesse zu unterteilen, wobei jedem Prozessor mindestens ein Prozess zum Abarbeiten zugeteilt wird. Für diesen Fall ist im Framework ein Mechanismus zur Interaktion über Prozessgrenzen hinweg vorgesehen. Durch diesen Mechanismus ist es möglich, dass Nachrichten auch zwischen Objekten unterschiedlicher Prozesse ausgetauscht werden können. Die Prozessgrenzen stellen somit keine Hindernisse für den Nachrichtenaustausch dar.

Beispielsweise zur Fehleranalyse oder für Wartungs- oder Reparaturaufgaben können dann Teile des Steuerungsprogramms beim Steuerungshersteller in einem ersten Prozess ablaufen und mit einem Teil des Steuerungsprogramms beim Anwender, das als zweiter Prozess des Steuerungsprogramms abgearbeitet wird, Nachrichten über ein allgemeines Datennetz, z.B. das Internet, austauschen.

Bei verteilten Systemen ist besonders auch der im Framework enthaltene Mechanismus zur Synchronisation der Abarbeitung des Steuerungsprogramms mit eingehenden Nachrichten von Bedeutung, bei dem die Reihenfolge der Bearbeitung von eingegangenen Nachrichten aus unabhängigen Kommunikationskanälen gesteuert wird. Dadurch wird sichergestellt, dass die Nachrichten bearbeitet werden, deren Daten gerade von einer Funktion benötigt werden, oder - sofern keine dringlicheren Aufgaben vorliegen - die Funktionen abgearbeitet werden, für die gerade Daten mittels einer Nachricht übertragen wurden. Weiterhin wird derart durch das Framework sichergestellt, dass alle Nachrichten abgearbeitet werden.

Das Framework in Form der Klassenbibliothek 1 und die anwendungsspezifischen Funktionen in den abgeleiteten Klassen 1.1 - 1.4 sind nach den Regeln der objekt orientierten Programmierung realisiert.

## Patentansprüche

1. Steuerungssystem einer numerischen Werkzeugmaschine mit einer Softwarestruktur, welche in ein Framework (1) und in anwendungsspezifische Funktionen unterteilt ist, **dadurch gekennzeichnet, daß** das Framework (1) durch eine Klassenbibliothek implementiert ist, in der die funktionale Struktur einer Steuerungssoftware für eine generische Steuerung mit einem Mensch-Maschine-Interface, einer Geometrieverarbeitung, einem Interpolator, einer Bewegungsverarbeitung und einem speicherprogrammierbaren Steuerteil vollständig festgelegt ist, und daß ein Programmcode für konkret programmierte Funktionen durch eine steuerungsspezifische Implementierung in Form von abgeleiteten Klassen (1.1 - 1.4) definiert ist, wodurch der Programmcode aufgeteilt ist in das anwendungsunabhängige Framework (1) und in außerhalb des Frameworks angeordneten maschinenspezifischen Programmcode in den abgeleiteten Klassen (1.1 - 1.4).

2. Steuerungssystem nach Anspruch 1, bei dem das Framework (1) einen Mechanismus für die Bildung von Objekten als Instanzen (1.1.1 - 1.4.1) abgeleiteter Klassen (1.1 - 1.4) beinhaltet.

3. Steuerungssystem nach einem der vorhergehenden Ansprüche, bei dem das Framework (1) einen Mechanismus für die Interaktion zwischen Objekten (1.1.1 - 1.4.1) beinhaltet.

4. Steuerungssystem nach Anspruch 3, bei dem der Mechanismus zur Interaktion zwischen Objekten (1.1.1 - 1.4.1) die Übertragung von Nachrichten über Kommunikationskanäle (2.1 - 2.5) und das Veranlassen der Verarbeitung der jeweiligen Nachricht beim Empfänger beinhaltet, wobei das Datenformat und das Protokoll der Übertragung objektunabhängig definiert ist.

5. Steuerungssystem nach einem der vorhergehenden Ansprüche, bei dem das Framework (1) einen Mechanismus zur Synchronisation der Abarbeitung des Steuerprogramms mit eingehenden Nachrichten beinhaltet und das Framework (1) die Reihenfolge der Bearbeitung von Nachrichten aus unabhängigen Kommunikationskanälen (2.1 - 2.5) steuert.

6. Steuerungssystem nach einem der vorhergehenden Ansprüche, bei dem das Framework (1) einen Mechanismus zur Fehlerbehandlung beinhaltet.

7. Steuerungssystem nach einem der vorhergehenden Ansprüche, welches als verteiltes System in Form von mehreren voneinander unabhängigen Prozessen realisiert ist und bei dem das Framework (1) einen Mechanismus zur Interaktion der Objekte (1.1.1 - 1.4.1) über Prozessgrenzen hinweg beinhaltet.

## Claims

1. Control system of a numerical machine tool with a software structure, which is divided into a framework (1) and application-specific functions, **characterised in that** the framework (1) is implemented by a class library, in which the functional structure of a control software for generic control with a man-machine interface, a geometrical processing part, an interpolator, a movement processing part and a stored-program controller is completely fixed, and that a program code for specifically programmed functions is defined by a control-specific implementation in the form of derived classes (1.1 - 1.4), through which the program code is divided into the application-independent framework (1) and into machine-specific program code arranged outside the framework in the derived classes (1.1 - 1.4).

2. Control system according to Claim 1, wherein the framework (1) includes a mechanism for the formation of objects as instances (1.1.1 - 1.4.1) of derived classes (1.1 - 1.4).

3. Control system according to one of the preceding claims, wherein the framework (1) includes a mechanism for the interaction between objects (1.1.1 - 1.4.1).

4. Control system according to Claim 3, wherein the mechanism for the interaction between objects (1.1.1 - 1.4.1) includes the transmission of messages via communication channels (2.1 - 2.5) and the prompting of the processing of the respective message at the receiver, wherein the data format and the protocol of the transmission are defined independently of the object.

5. Control system according to one of the preceding claims, wherein the framework (1) includes a mechanism for synchronisation of the servicing of the control program with incoming messages and the framework (1) controls the sequence of the processing of messages from independent communication channels (2.1 - 2.5).

6. Control system according to one of the preceding claims, wherein the framework (1) includes a mechanism for error handling.

7. Control system according to one of the preceding claims, which is configured as distributed system in the form of several mutually independent processes, and wherein the framework (1) includes a mechanism for interaction of the objects (1.1.1 - 1.4.1) beyond process limits.

## Revendications

1. Système de commande d'une machine-outil numérique avec une structure de logiciel qui est divisée en un cadre d'applications (1) et en des fonctions spécifiques aux applications, **caractérisé par le fait que** le cadre d'applications (1) est implémenté au moyen d'une bibliothèque de classes dans laquelle la structure fonctionnelle d'un logiciel de commande pour une commande générique est parfaitement définie avec une interface homme-machine, un traitement géométrique, un interpolateur, un traitement de déplacement et un module de commande programmable à mémoire, et **par le fait qu'**un code de programme pour des fonctions concrètement programmées est défini par une implémentation spécifique à la commande sous la forme de classes dérivées (1.1-1.4), le code de programme étant ainsi divisé en cadre d'applications (1) indépendant de l'application et en code de programme spécifiques de la machine disposé à l'extérieur du cadre d'applications dans les classes dérivées (1.-1.4).

2. Système de commande selon la revendication 1, dans lequel le cadre d'applications (1) contient un mécanisme pour la formation d'objets en tant qu'instances (1.1.1-1.4.1) de classes dérivées (1.1-1.4).

3. Système de commande selon une des revendications précédentes, dans lequel le cadre d'applications (1) contient un mécanisme pour l'interaction entre objets (1.1.1-1.4.1).

4. Système de commande selon la revendication 3, dans lequel le mécanisme pour l'interaction entre objets (1.1.1-1.4.1) comprend la transmission d'informations via des canaux de communication (2.1-2.5) et le déclenchement du traitement de l'information concernée dans le récepteur, le format de données et le protocole de transmission étant définis de manière indépendante de l'objet.

5. Système de commande selon une des revendications précédentes, dans lequel le cadre d'applications (1) contient un mécanisme pour la synchronisation du déroulement du programme de commande avec les informations entrantes et le cadre d'applications (1) contrôle l'enchaînement du traitement d'informations en provenance de canaux de communication (2.1-2.5) indépendants.

6. Système de commande selon une des revendications précédentes, dans lequel le cadre d'applications (1) comprend un mécanisme pour le traitement d'erreurs.

7. Système de commande selon une des revendications précédentes, qui en tant que système divisé est réalisé sous la forme de plusieurs process indépendants et dans lequel le cadre d'applications (1) comprend un mécanisme pour l'interaction des objets (1.1.1-1.4.1) au delà des limites du process.
